# EUROPÄISCHE PATENTSCHRIFT

(11) **EP 3 566 566 B1**
(45) Veröffentlichungstag und Bekanntmachung des Hinweises auf die Patenterteilung: **01.12.2021**
(21) Anmeldenummer: 19173049.8
(22) Anmeldetag: 07.05.2019
(51) Int. Cl.: A01D 43/063, A01D 34/86

(54) **AUFSATZ FÜR GARTENGERÄTE**
ATTACHMENT FOR GARDEN EQUIPMENT
GARNITURE POUR APPAREILS DE JARDINAGE

(30) Priorität: 07.05.2018 DE 102018110857
(43) Veröffentlichungstag der Anmeldung: 13.11.2019
(73) Patentinhaber: Hauf, Hans, 71701 Schwieberdingen (DE)
(72) Erfinder: Hauf, Hans, 71701 Schwieberdingen (DE)
(74) Vertreter: Jeck, Anton

(56) Entgegenhaltungen:
- BE-A6- 1 005 783
- CN-A- 107 046 929
- US-A- 2 942 396
- US-A- 3 977 477
- US-A1- 2004 080 205

## Beschreibung

Die vorliegende Erfindung betrifft einen Gartenarbeitsgeräteaufsatz für ein antreibbares Gartengerät gemäß dem Oberbegriff des Anspruchs 1.

Ein solcher Aufsatz weist Mittel zur betrieblichen Verbindung des Aufsatzes mit dem Gartengerät auf.

Insbesondere bei Gartenanlagen, welche an Steilhängen gelegen sind, können anfallende Materialien, wie beispielsweise Erde, Äste und Baumstämme oder Gras, nur unter großer Mühe transportiert werden. Üblicherweise wird hierfür eine Schubkarre verwendet. Gerade bei Gartenanlagen, welche für den Einsatz von Fahrzeugen, wie beispielsweise kleinen Traktoren, zu klein sind, ist der Gartenpfleger bisher auf eine manuelle Beförderung beschränkt.

Die BE 1005783A6 offenbart einen Aufsatz mit Aufnahmebehälter für einen Rasenmäher.

Die US 2004/0080205 A1 lehrt ein Verbindungsmittel für die Wanne einer Schubkarre mit einem Rasenmäher.

Mit der vorliegenden Erfindung wird die Aufgabe gelöst, einen komfortablen Transport von Transportgut mit nicht dafür geeignetem Gartengerät zu ermöglichen.

Erfindungsgemäß wird die Aufgabe durch einen Aufsatz für ein antreibbares Gartengerät mit den Merkmalen des kennzeichnenden Teils des Anspruchs 1 gelöst.

Erfindungsgemäß ist es vorgesehen, dass eine Aufnahmepartie für Transportgut an dem Aufsatz für antreibbare Gartengeräte vorgesehen ist.

Die Erfindung versteht sich insbesondere in Abgrenzung zu den üblichen steuerbar betriebenen Gartengeräten, wie beispielsweise einem Fahrzeug, in welches Gartengeräte integriert sind und an welche einfach ein Anhänger zum Transport angehängt werden kann. Ein solches Fahrzeug kann beispielsweise ein Rasenmäherfahrzeug mit Sitz und Lenkrad sein, welches im Grunde nichts anderes als ein kleiner Traktor ist. An solche Traktoren ist natürlich grundsätzlich, insbesondere über eine Anhängerkupplung, ein Anhänger für Transportgut anhängbar. Vielmehr ist erfindungsgemäß unter einem antreibbaren Gartengerät ein solches zu verstehen, welches zwar grundsätzlich eine Motorisierung aufweist, diese Motorisierung jedoch in erster Linie zur Betätigung des Gartenarbeitsgeräts, wie beispielsweise ein rotierendes Schneidmesser, vorgesehen ist. Hierbei kann es sich vorzugsweise um einen angetriebenen Handrasenmäher handeln, welcher einen Motor aufweist, der das Schneidblatt des Rasenmähers antreibt. Zusätzlich ist es bei solchen Rasenmähern üblich, dass zumindest die Räder einer Radachse mit angetrieben werden, wodurch es dem Gartenpfleger erleichtert werden soll, den Rasenmäher vor sich herzuschieben. Dies ist insbesondere bei Steilhängen, an welchem ein Rasen geschnitten werden soll, von Vorteil, da der Rasenmäher einen Teil der benötigten Fortbewegungskraft über die angetriebenen Räder bereitstellt, welche zum Schieben des Rasenmähers, insbesondere bergauf, erforderlich ist. Ein solcher Rasenmäher kann auch angetriebener Handrasenmäher genannt werden.

Voruntersuchungen haben ergeben, dass die momentan am Markt gängigen Motorgeräte in der Regel mit einem Schraubgelenk am Handbedienungsbügel ausgerüstet sind, um beispielsweise eine platzsparende Aufbewahrung zu ermöglichen. Dieses Konstruktionsmerkmal in Verbindung mit einem Nutprofil kann die universelle Anwendung zum Aufbau von Lastmittel, sowie die Lieferung der Geräte als Bausatz ermöglichen.

Vorzugsweise ist die Erfindung somit auf einen Aufsatz für antreibbare Gartengeräte gerichtet, welche zwar mindestens ein angetriebenes Rad aufweisen, jedoch nicht wie ein Fahrzeug mit einer Lenkeinheit und einem Sitz für den Gartenpfleger ausgebildet sind.

Grundsätzlich kann der Aufsatz für ein beliebiges Hand-Gartengerät mit Antrieb verwendet werden. Hierzu zählen beispielsweise auch Hand-Vertikutierer, Laubstaubsauger und andere Gartengeräte, also Gartenarbeitsgeräte, welche üblicherweise von einem Gartenpfleger über eine entsprechende Lenkstange durch den Garten geschoben werden, wobei zumindest ein Teil der Kraft, welche zum Schieben aufgewendet wird, durch mindestens ein angetriebenes Rad kompensiert wird. In Abgrenzung zu Rasentraktoren mit Mähfunktion können die antreibbaren Gartengeräte, für welche der erfindungsgemäße Aufsatz ausgebildet ist, auch angetriebene Garten-Kleingeräte genannt werden.

Ein Grundgedanke der vorliegenden Erfindung ist es, einen Aufsatz für ein antreibbares Gartengerät bereitzustellen, welcher eine Aufnahmepartie für Transportgut aufweist. Bei der Aufnahmepartie kann es sich grundsätzlich um jede Einrichtung handeln, welche den Transport von Gütern, insbesondere von in Gärten anfallenden Materialien, ermöglicht. Die Aufnahmepartie kann hierbei beispielsweise gabelförmig für den Transport von länglichen Objekten, wie beispielsweise Ästen und Baumstämmen, ausgebildet sein. Die Aufnahmepartie kann auch als Gefäß zur Aufnahme von Kleingut, wie beispielsweise Rasenschnitt oder Erde, ausgebildet sein. Besonders bevorzugt ist als Gefäß der Aufsatz eines Schubkarrens, also eine Schubkarrenwanne, vorsehbar.

Vorzugsweise ist es vorgesehen, dass der Aufsatz und/oder das Gerät Mittel zur lösbaren Verbindung aufweisen.

Nach einer Weiterbildung der Erfindung ist es vorgesehen, dass in mindestens einem Kontaktbereich zwischen Gartengerät und Aufsatz der Aufsatz eine Fixierung als Mittel zur betrieblichen Verbindung aufweist, mit welcher der Aufsatz an dem Arbeitsgerät fixierbar ist. Der Aufsatz kann insbesondere lösbar mit dem Gartengerät verbunden sein. Eine solche Verbindung (Mittel zur betrieblichen Verbindung) kann beispielsweise eine Schraub- oder Bolzenverbindung sein. Grundsätzlich ist jede lösbare Verbindung zwischen Aufsatz und Gartengerät erfindungsgemäß vorsehbar. Hierzu zählen insbesondere auch Rast- und Schnappverbindungen.

Nach einer bevorzugten Weiterbildung der Erfindung ist es vorgesehen, dass die Mittel zur betrieblichen Verbindung als Gelenk oder Achse ausgebildet sind, um welche der Aufsatz beziehungsweise die Mittel zur betrieblichen Verbindung relativ zum Gartengerät klappbar und/oder drehbar sind. Besonders dann, wenn eine Schraub- oder Bolzenverbindung zwischen Aufsatz und Gartengerät vorliegt, kann das Verbindungselement als Gelenk oder Drehachse für den Aufsatz verwendet werden. Dies kann beispielsweise dann zweckdienlich sein, wenn das Transportgut in der Aufnahmepartie von dem Aufsatz durch Auskippen entfernt werden soll.

Nach einer besonders bevorzugten Weiterbildung der Erfindung ist es vorgesehen, dass der Aufsatz in einem zweiten und/oder weiteren Kontaktbereich mindestens ein Auflageelement zur Auflage des Aufsatzes auf dem Gartengerätaufweist. Grundsätzlich kann der Aufsatz in allen Kontaktpunkten mit dem Gartengerät eine Fixierung aufweisen, mittels welcher der Aufsatz an einem Gartengerät fixierbar ist. Nicht ausschließlich, jedoch gerade dann, wenn der Aufsatz mit einem Gelenk oder einer Drehachse, wie voranstehend beschrieben, ausgebildet ist, kann es von Vorteil sein, wenn der Aufsatz in zumindest einem der Berührungspunkte beziehungsweise der Auflagebereiche mit dem Gartengerät lose auf dem Gartengerät aufliegt.

Hierdurch kann eine stabile Auflage des Aufsatzes auf dem Gartengerät bereitgestellt sein, wodurch ein Kippen oder Drehen des Aufsatzes, insbesondere zum Leeren der Aufnahmepartie für Transportgut, in einfacher Weise ermöglicht ist. Vorzugsweise kann das Auflageelement mit einer Sicherung ausgebildet sein, welche das Auflageelement vor einem ungewollten Klappen oder Drehen sichert. Gegenüber einer Fixierung kann eine Sicherung schneller und/oder einfacher lösbar sein.

Eine zweckmäßige Weiterbildung der vorliegenden Erfindung besteht darin, dass das Auflageelement mit einem Vibrationsentkoppelungselement, insbesondere mit einem Polymer, zwischen Gartengerätund Aufsatz bereitgestellt ist. Nicht ausschließlich aber gerade dann, wenn die Mittel zur betrieblichen Verbindung gelenkartig oder als Achse ausgebildet sind, können Vibrationen des angetriebenen Gartengeräts zu einer Unruhe des Aufsatzes führen, wobei der Aufsatz gegenüber dem Gartengerät zu vibrieren und/oder zu flackern beginnt. Durch eine entsprechende Vibrationsentkoppelung zwischen Aufsatz und Gartengerät beziehungsweise Auflageelement des Aufsatzes und Gartengerät können störende Vibrationen gemindert oder unterdrückt werden. Grundsätzlich ist als Vibrationsentkoppelungselement jedes Material geeignet, welches eine Vibrations- beziehungsweise Oszillationsdämpfung bewirken kann. Das Vibrationsentkoppelungselement kann in einem unteren Bereich unterhalb des Auflageelements zwischen Auflageelement und Gartengerät vorgesehen sein.

Nach einer zweckmäßigen Weiterbildung der vorliegenden Erfindung ist es vorgesehen, dass die Aufnahmepartie an einer Halterung des Aufsatzes vorzugsweise lösbar befestigt ist. Grundsätzlich kann die Aufnahmepartie einstückig mit dem Aufsatz ausgebildet sein. Erfindungsgemäß ist es jedoch auch denkbar, dass die Aufnahmepartie als separates Element vorliegt, welches über eine Halterung an dem Aufsatz befestigt ist. Hierdurch kann eine Lösbarkeit und/oder Austauschbarkeit der Aufnahmepartie an dem Aufsatz bereitgestellt sein.

Besonders bevorzugt ist es, dass die Halterung flexibel zur Befestigung unterschiedlicher Aufnahmepartien anpassbar ist. Hierdurch können Aufnahmepartien unterschiedlicher Größe an dem Aufsatz über eine angepasste Halterung befestigt werden.

Zweckmäßigerweise kann es vorgesehen sein, dass die Mittel zur betrieblichen Verbindung an unterschiedliche Gartenarbeitsgeräte anpassbar sind. So kann der Aufsatz nicht nur über die Halterung verschiedene Aufnahmepartien aufnehmen, sondern er kann auch an unterschiedlichen Gartengeräten befestigbar sein. Dies kann auch unabhängig von einer flexiblen Halterung für eine Aufnahmepartie vorgesehen sein.

Eine besonders zweckmäßige Anpassung des Aufsatzes kann dadurch erreicht werden, dass zumindest die Halterung und/oder die Mittel zur betrieblichen Verbindung und/oder dass mindestens ein Auflageelement jeweils mit mindestens einem Profilkörper und/oder Stahlband mit Langlöchern und/oder Stahlrohr mit Langlöchern gebildet sind. Profilkörper sind längliche Objekte, welche mindestens eine Nut aufweisen, in welcher Verbindungsmittel mit beispielsweise einem weiteren Profilkörper oder den voranstehend genannten Einrichtungen, wie beispielsweise der Halterung, den Mitteln zur betrieblichen Verbindung, dem Auflageelement oder der Aufnahmepartie für Transportgut, verbindbar sind.

Die Nut kann insbesondere entlang einer Längsrichtung des Profilkörpers, vorzugsweise entlang seiner gesamten Länge, vorgesehen sein. Hierdurch kann eine anpassbare Verbindung zwischen dem Profilkörper und einer weiteren Einrichtung an einem beliebigen Punkt des Profilkörpers bewirkt werden.

Erfindungsgemäß ist es vorgesehen, dass an der Halterung entlang des Profilkörpers mindestens ein Verbindungselement für eine Aufnahmepartie verschiebbar gelagert bereitgestellt ist und ausgebildet ist, eine Aufnahmepartie an der Halterung zu befestigen. Das Verbindungselement kann insbesondere eine Schraub- oder Bolzenverbindung sein, welche bevorzugt in der voranstehend genannten Nut des Profilkörpers vorsehbar ist. Das Verbindungselement kann entlang der Nut innerhalb des Profilkörpers bewegbar sein, wodurch das Verbindungselement positionsgenau an eine an der Halterung zu befestigenden Aufnahmepartie anpassbar ist. Somit kann dieselbe Halterung für eine Vielzahl von Aufnahmepartien verwendet werden. Hierbei kann die Aufnahmepartie eine der Schraub- oder Bolzenverbindung entsprechende Gegenaufnahme aufweisen, über welche die Aufnahmepartie an der Halterung befestigbar ist. Somit ist das Verbindungselement lediglich gegenüber der Gegenaufnahme der Aufnahmepartie so zu positionieren, dass eine Verbindung zwischen Verbindungselement und Gegenaufnahme ermöglicht ist. Insbesondere aufgrund der vorgesehenen Nut in dem Profilkörper kann eine Anordnung des Verbindungselements stufenlos entlang des Profilkörpers vorgenommen werden.

Besonders bevorzugt ist es vorgesehen, dass das Auflageelement entlang seines Profilkörpers mit mindestens einem Verbindungselement zur Verbindung mit dem mindestens einen Vibrationsentkoppelungselement verschiebbar gelagert bereitgestellt ist. Die gleiche Struktur, wie sie voranstehend hinsichtlich der Halterung und des Profilkörpers beschrieben wurde, kann auch für das Auflageelement und sein Verbindungselement gelten, welches entlang seines Profilkörpers verschiebbar lagerbar ist. Aufgrund einer entsprechenden Nut in dem Profilkörper kann das Vibrationsentkoppelungselement beliebig entlang des Auflageelements, vorzugsweise horizontal, positionierbar sein, wobei das Verbindungselement wiederum stufenlos entlang der Nut des Profilkörpers positionierbar sein kann.

Eine zweckmäßige Weiterbildung der vorliegenden Erfindung besteht darin, dass die Mittel zur betrieblichen Verbindung, insbesondere das Gelenk oder die Achse, als Langnut ausgebildet sind, um vorzugsweise in eine gartengerät-inhärente Schraubbeziehungsweise Bolzenverbindung oder einen sonstigen Vorsprung am Gartengerät einzugreifen. Grundsätzlich ist der erfindungsgemäße Aufsatz für eine Vielzahl von Arbeitsgeräten im Gartenbereich einsetzbar. Hierbei kann sich der Aufsatz Verbindungselemente, welche bereits an einem Gartengerät zu dessen betrieblicher Benutzung vorgesehen sind, für eine Fixierung des Aufsatzes auf dem Gartengerät zu eigen machen. Insbesondere im Bereich der Rasenmäher ist an der grundsätzlich vorgesehenen Lenkstange, mittels welcher der Gartenpfleger den Rasenmäher vor sich her schiebt, eine Schraub- oder Bolzenverbindung vorgesehen, mit der die Lenkstange beispielsweise teleskopartig ausfahrbar oder zur Lagerung zerlegbar ist. Eine Schraub- oder Bolzenverbindung oder eine anderweitig hervorstehende Einrichtungen an dem Gartengerät, kann der Aufsatz über die voranstehend beschriebene Langnut oder andere Verbindungsmittel an dem Gartengerät zur Befestigung nutzen.

Grundsätzlich kann eine Festlegung des Aufsatzes an dem Gartengerät auch über eine der Radachsen des Arbeitsgeräts erfolgen (Mittel zur betrieblichen Verbindung), wobei die bereits beschriebene Auflage jeweils an einem der Fixierung gegenüberliegenden Ende des Gartengeräts, insbesondere in einem vorderen oder hinteren Bereich, vorgesehen sein kann.

Der Profilkörper kann auch als Stabprofil bezeichnet werden und auf mindestens einer Seite, vorzugsweise auf zwei, drei oder vier Längsseiten ein längsausgerichtetes Nutenprofil aufweisen. Der erfindungsgemäße Aufsatz kann Stabprofile mit den Längsnuten (Nutenprofil) und Verbindungselementen, welche vorzugsweise als Schraub-Verbindungselemente ausgebildet sind, aufweisen. Diese können eine flexible Anpassung auf die verschiedensten Fabrikate von Motor-Mähern und anderen Gartenarbeitsgeräten ermöglichen.

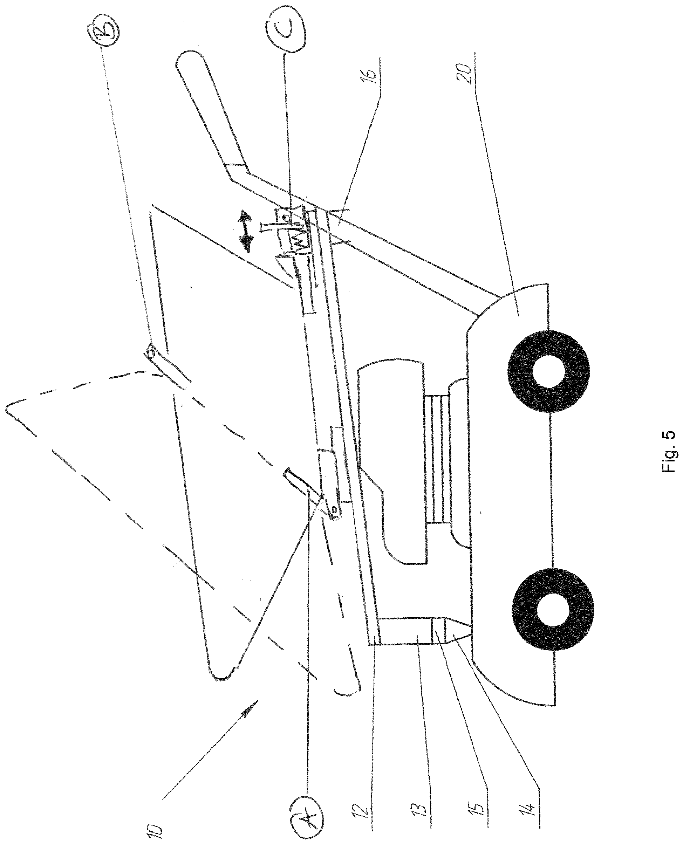

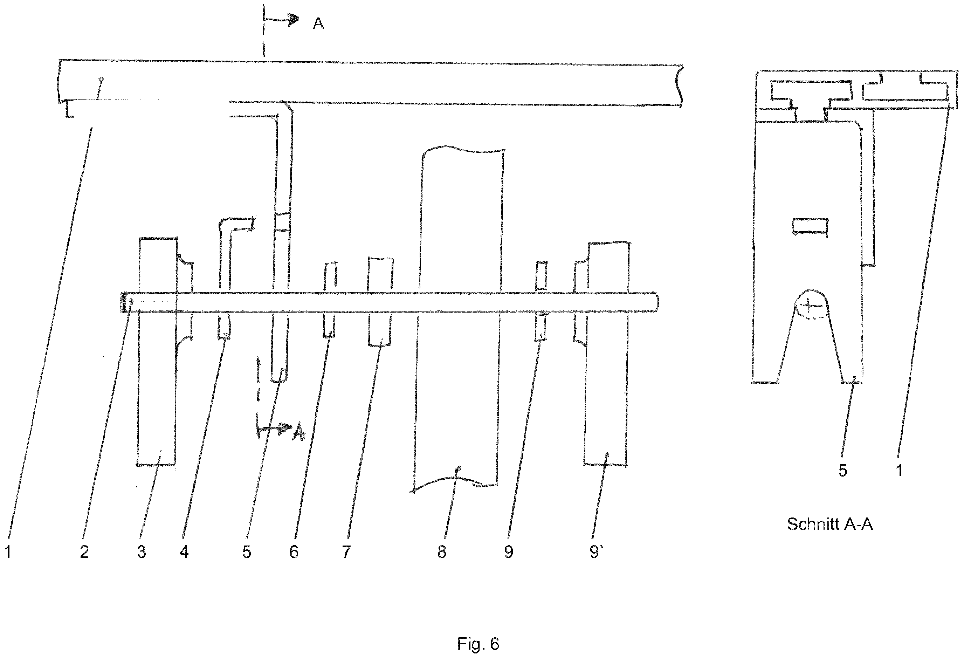

Die Anpassung auf die jeweiligen Gartenarbeitsgeräte erfolgt insbesondere durch Verschieben und Verschrauben der einzelnen Profilkörper und/oder Funktionselemente, wie beispielsweise dem Aufsatz, gegeneinander/zueinander. Hierdurch kann eine Verlagerung der einzelnen Profilkörper zueinander beziehungsweise der Funktionselemente entlang der Längsnuten des Profilkörpers erfolgen. Für eine Verbindung der einzelnen Stabprofile beziehungsweise der Funktionselemente untereinander sowie mit den Stabprofilen kann ein Verbindungswinkel mit beispielsweise einer T-Schraubenbefestigung vorgesehen sein. Diese geht insbesondere aus den Figuren 5 und 6 hervor.

Die erfindungsgemäße Vorrichtung kann daher als Bausatz zur Montage bereitgestellt sein, welcher durch den Verwender des Aufsatzes individuell an das Gartenarbeitsgerät anpassbar sein kann.

Der Aufsatz, welcher auch als Gestell mit Lastenträger bezeichnet werden kann, kann an einem Schraubgelenk des schwenkbaren Bügelgriffs eines Mähers befestigt werden. Dabei kann der Aufsatz beispielsweise über eine Hebelmutter verschraubbar sein.

Durch spezielle Formgebung eines Befestigungswinkels an dieser Schraubverbindung wird zusätzlich zu einem Kraftschluss der Verbindung Formschluss, zum Beispiel durch Ausbildung eine U-Scheibe mit Nase, erreicht. Ein solches Schraubgelenk ist beispielsweise in Figur 6 dargestellt.

Bevorzugt ist eine Verriegelung eines schwenkbaren Lastenbehälters, insbesondere der Aufnahmepartie 11 an einem Grundkörper vorgesehen, welcher die Profilteile beziehungsweise Stabprofile aufweisen kann. Die Aufnahmepartie 11 kann dabei gegenüber dem Grundkörper verschwenkbar angeordnet sein, wobei die Verriegelung im verriegelten Zustand die Schwenkbarkeit der Aufnahmepartie 11 verhindern kann.

Der Bügelgriff eines Mähers kann mit einer Doppel-Schraubverbindung in Form eines Schraubgelenks ausgelegt sein. Dies ermöglicht, dass der Bügelgriff des Gartenarbeitsgeräts unabhängig von der Befestigung des Lastenträgers (erfindungsgemäßer Aufsatz), insbesondere der Aufnahmepartie 11, fixiert werden kann.

Die flexible Anpassung und Einstellbarkeit des Grundkörpers des erfindungsgemäßen Aufsatzes, welches auch als Grundgestell bezeichnet werden kann, ermöglicht die optimale Anordnung des Lastbehälters, welche insbesondere als Aufnahmepartie bezeichnet werden kann, vorzugsweise oberhalb des Antriebrades des Gartenarbeitsgeräts.

Dadurch kann eine optimale Ausrichtung des Schwerpunktes des erfindungsgemäßen Aufsatzes ermöglicht sein.

Der erfindungsgemäße Aufsatz kann ohne Anpassung des Gartenarbeitsgeräts auf diesem angeordnet werden. Anpassungen können hierbei insbesondere Schweißarbeiten sein, welche einen Aufsatz auf dem Mäher oder ein entsprechendes Verbindungsglied an dem Mäher ortsfest vorsieht. Ein solches Verbindungsglied ist für den funktionsgemäßen Betrieb des Gartenarbeitsgeräts dabei nicht erforderlich, sondern wäre nur für einen Aufsatz angeordnet.

Der Aufsatz kann demnach auf einem Gartenarbeitsgerät frei von Veränderungen des Gartenarbeitsgeräts an diesem vorgesehen werden.

Die Erfindung wird nun anhand der beigefügten Zeichnungen näher erläutert. Es zeigen:
- Figur 1: eine Seitenansicht des erfindungsgemäßen Aufsatzes auf einem Gartengerät,
- Figur 2: eine Draufsicht auf den erfindungsgemäßen Aufsatz mit Aufnahmepartie ohne Gartengerät,
- Figur 3: eine perspektivische Ansicht eines beispielhaften Profilkörpers,
- Figur 4: eine lösbare Verbindung zwischen einem Profilkörper und einer Aufnahmepartie mittels Schraub- oder Bolzenverbindung,
- Figur 5: eine Seitenansicht eines erfindungsgemäßen Aufsatzes mit Kippfunktion,
- Figur 6: eine Seiten- und eine Draufsicht gemäß Schnitt A-A durch eine bevorzugte Halterung mit Mitteln zur betrieblichen Verbindung eines Gartengeräts und
- Figur 7: eine Detailansicht eines Verbindungsbereichs zwischen zwei Profilkörpern der vorliegenden Erfindung.

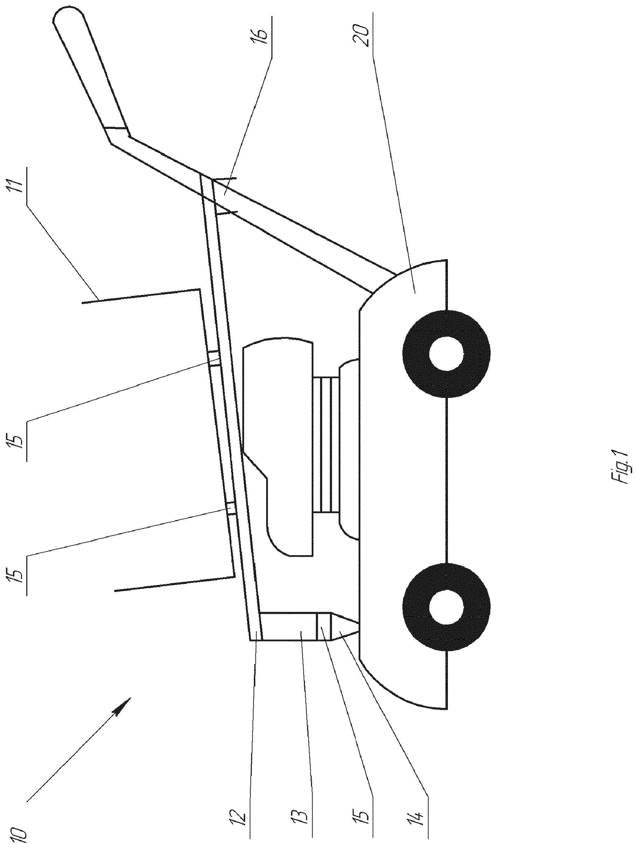

Figur 1 zeigt eine bevorzugte Ausführungsform des erfindungsgemäßen Aufsatzes 10 auf einem Gartengerät 20, welches vorliegend als Handrasenmäher, insbesondere als angetriebenes Kleingartengerät, ausgebildet ist.

Auf dem Aufsatz 10 ist eine Aufnahmepartie 11 angeordnet, welche vorliegend als Wanne ausgebildet ist. Grundsätzlich kann die Aufnahmepartie 11 an das zu transportierende Transportgut anpassbar sein und insbesondere eine wannenförmige, gabelförmige oder sonstige zweckmäßige Form zum Transport von beispielsweise Gartenmaterial aufweisen. Grundsätzlich kann die Aufnahmepartie in einem beliebigen Bereich oberhalb des Aufsatzes 10 angeordnet sein. Aufgrund des Schwerpunktes ist es jedoch besonders zweckdienlich, die Aufnahmepartie 11 oberhalb des Motors oder besonders nahe an dem Griff des Gartengeräts 20 vorzusehen.

Die Aufnahmepartie kann mit einem Grundkörper 12, 13 gebildet sein, welcher einteilig oder mehrteilig ausgebildet sein kann. Der Grundkörper dient zur Aufnahme des Aufsatzes 10 sowie zur Auflage beziehungsweise Fixierung des Aufsatzes auf dem Gartengerät. Hierfür können an dem Grundkörper verschiedene Einrichtungen vorgesehen sein, welche die einzelnen Aufgaben übernehmen. Grundsätzlich kann der Grundkörper so ausgestaltet sein, dass keine weiteren Einrichtungen an diesem vorgesehen sein müssen, sondern der Grundkörper 12, 13 die nachfolgend und voranstehend beschriebenen Einrichtungen als inhärente Bauteile aufweist.

Zur Fixierung der Aufnahmepartie 11 kann auf einem, im betriebsverbundenen Zustand von Aufsatz 10 und Gartengerät 11, in etwa horizontalen Teil 12 des Grundkörpers eine Halterung 15 vorgesehen sein, auf welcher die Aufnahmepartie 11 befestigt ist. Grundsätzlich kann die Befestigung der Aufnahmepartie 11 sowohl lösbar als auch dauerhaft sein. Grundsätzlich ist es auch möglich, dass die Aufnahmepartie 11 direkt auf dem Grundkörper des Aufsatzes 10 ohne eine entsprechende Halterung 15 zwischen Aufnahmepartie 11 und Aufsatz 10 vorgesehen ist.

Vorzugsweise ist die Halterung 15 mit mehreren Kontaktpunkten oder einer Kontaktfläche ausgebildet, über welche die Aufnahmepartie 11 auf der Halterung 15 fixierbar ist. Besonders bevorzugt ist die Halterung 15 in etwa orthogonal zum Grundkörper des Aufsatzes 10 ausgerichtet. In einem hinteren Bereich, welcher dem Gartenpfleger bei der Bedienung des Gartengeräts zugerichtet ist, ist an einem Griff des Gartengeräts 20 ein Mittel zur betrieblichen Verbindung 16 vorgesehen. Dieses kann an dem Aufsatz, insbesondere dem Grundkörper, angeordnet beziehungsweise mit diesem verbunden sein. Das Mittel 16 kann auch beispielsweise an einer Hinterachse der Hinterräder des Gartengeräts befestigt werden.

Besonders bevorzugt ist das Mittel zur betrieblichen Verbindung als Nut beziehungsweise Langnut ausgebildet, welche mit einer Schraub- oder Bolzenverbindung an dem Gartengerät lösbar fixierbar ist. Die Schraub- oder Bolzenverbindung ist nicht zwingend Teil des erfindungsgemäßen Aufsatzes 10, sondern kann bevorzugt auch als inhärentes Bauteil des Gartengeräts 20, beispielsweise zur lösbaren Aufteilung des in Figur 1 dargestellten Haltegriffs, bereitgestellt sein.

Grundsätzlich ist der Aufsatz 10 somit ausgebildet, Einrichtungen des Gartengeräts, auf welchen der Aufsatz 10 befestigt werden soll, zur Befestigung zu verwenden, wobei er sich zur Befestigung an Einrichtungen des Gartengeräts, an denen er angebracht werden soll, eignet.

In einem vorderen Bereich des Gartengeräts 20 kann ein weiterer Bereich des Grundkörpers 13 vorgesehen sein. Dieser ist vorliegend als vertikal angeordneter Teil ausgebildet. Grundsätzlich kann der Grundkörper in sich einstückig ausgebildet sein, wobei er mit einem Winkel oder einer Biegung an die Form des Gartengeräts angepasst sein kann. Besonders zweckmäßig ist jedoch die mehrteilige Ausbildung des Grundkörpers, wodurch der Grundkörper an die Form des Gartengeräts 20 flexibel anpassbar ist. Die flexible Anpassbarkeit kann insbesondere dann gegeben sein, wenn der Grundkörper aus Profilkörper gebildet ist, wie nachfolgend beschrieben.

In dem vorderen Bereich des Aufsatzes 10 kann eine weitere Halterung 15 angeordnet sein, an welcher ein Auflageelement 14, vorzugsweise lösbar, befestigt sein kann. Das Auflageelement 14 kann den Aufsatz 10 gegenüber dem Gartengerät 20 abstützen und kann, muss jedoch nicht, gegenüber dem Gartengerät fixierbar sein.

Ist das Auflageelement 14 lediglich in dem vorderen Bereich des Gartengeräts 20 aufgelegt, besteht die Möglichkeit, den Aufsatz über die Mittel zur betrieblichen Verbindung 16 gegenüber dem Gartengerät 20 zu kippen beziehungsweise um die Verbindungsachse an den Mitteln zur betrieblichen Verbindung zu drehen. Hierdurch kann Transportgut, welches in der Aufnahmepartie 11 vorgesehen ist, entladen werden, wie es in ähnlicher Weise beispielsweise von einem Schubkarren bekannt ist.

Grundsätzlich können die Mittel zur betrieblichen Verbindung 16 auch in einem vorderen Bereich an dem Gartengerät 20, beispielsweise an einer Vorderachse der beiden Vorderräder, fixiert sein. Ein entsprechendes Auflageelement 14 könnte in diesem Fall beispielsweise in einem hinteren Bereich in der Nähe der Lenkstange oder der Hinterachse des Gartengeräts auf dem Gartengerät 20 aufliegen. Hierdurch wäre insbesondere ein Auskippen des Aufsatzes nach vorne hin, wie man es von Schubkarren kennt, ermöglicht.

Zur Fixierung der einzelnen Einrichtungen, wie beispielsweise dem Auflageelement 14 oder der Aufnahmepartie 11, können Verbindungselemente 17 vorgesehen sein, welche eine lösbare und flexible Verbindung zwischen dem Aufsatz 10, insbesondere seinem Grundkörper 12, 13, und den einzelnen Einrichtungen bewirkt. Vorzugsweise sind die Einrichtungen 11, 12, 13, 14,15 und 16 jeweils für sich genommen an ihren jeweiligen Kontaktpunkten gegeneinander verschiebbar gelagert. So ist beispielsweise die Halterung 15 gegenüber dem Grundkörper 12 verschiebbar gelagert, wodurch die Position der Aufnahmepartie 11 gegenüber dem Aufsatz 10 veränderbar ist. Wiederum kann die Position der einzelnen Verbindungselemente 17 an den Halterungen 15 veränderbar gelagert sein, wodurch die Verbindungselemente 17 für unterschiedliche Aufnahmepartien 11 beziehungsweise für unterschiedliche Positionen der Auflageelemente 14 anpassbar sein können.

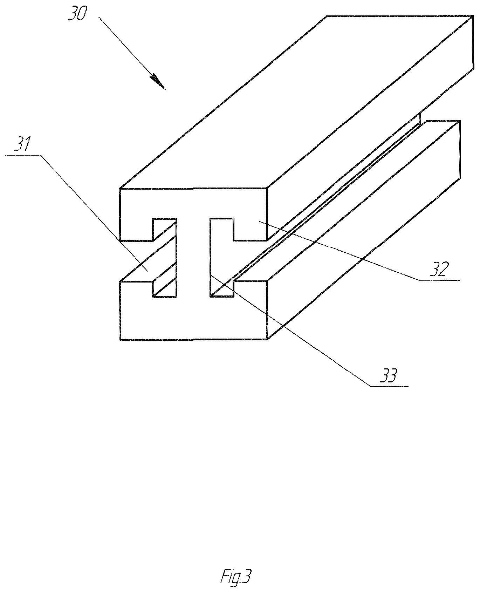

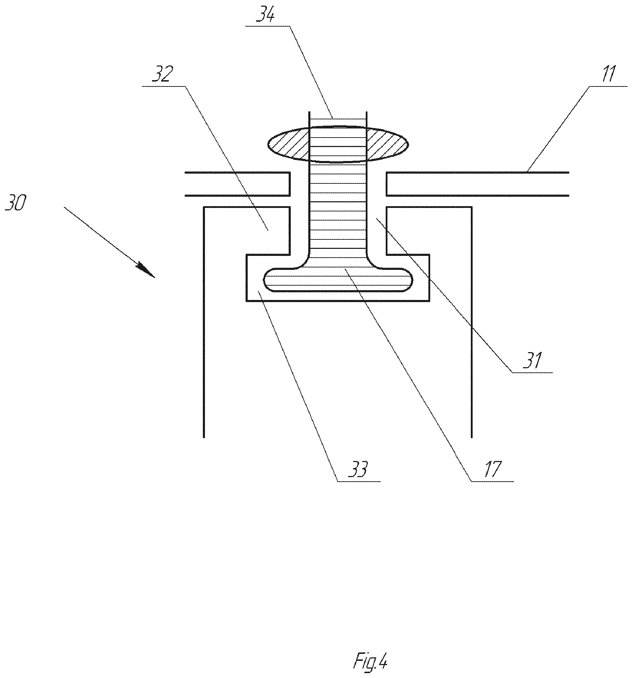

Besonders bevorzugt sind zumindest einzelne Teile des Aufsatzes 10 aus Profilkörpern 30 gebildet, welche zumindest eine Längsnut entlang einer Längsachse des Profilkörpers 30 aufweisen. Der Profilkörper 30 wird im Detail in den Figuren 3 und 4 beschrieben.

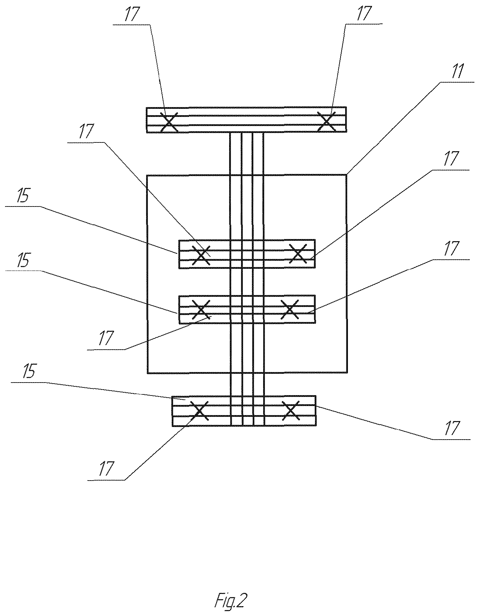

Figur 2 zeigt eine Draufsicht auf ein bevorzugtes Ausführungsbeispiel des erfindungsgemäßen Aufsatzes 10. An einem nach Figur 2 vertikal ausgerichteten Grundkörper sind einzelne Halterungen 15 angeordnet. In Bezug auf Figur 1 ist die oberste Halterung diejenige, welche die Mittel zur betrieblichen Verbindung 16 aufweist und beispielsweise an einem Griff eines Gartengeräts 20 angeordnet werden kann. Entlang des Grundkörpers sind in einem mittleren Bereich zwei weitere Halterungen 15 angeordnet, auf welchen die Aufnahmepartie 11 vorgesehen sein kann. Diese ist durch ein angedeutetes Rechteck dargestellt.

In einem unteren Bereich der Figur 2 ist eine weitere Halterung 15 dargestellt, an welcher beispielsweise ein Auflageelement 14 angeordnet sein kann. An den einzelnen Halterungen 15 sind beispielhaft jeweils zwei Verbindungselemente 17 als Kreuz angedeutet. Grundsätzlich kann eine beliebige Anzahl von Verbindungselementen 17, insbesondere 1, 2, 3, 4 oder 5 Verbindungselemente 17, vorgesehen werden. Jedes dieser Verbindungselemente kann eine Verbindung zwischen der Halterung 15 und einem weiteren Element, wie beispielsweise einem Auflageelement 14 oder einer Aufnahmepartei 11, bilden. Die untere Halterung 15 kann auch direkt als Auflageelement 14 dienen.

Jeweils am Kreuzungspunkt des vertikal dargestellten länglichen Grundkörpers und den einzelnen Halterungen 15 können auch jeweils ein oder mehrere Verbindungselemente 17 vorgesehen sein, welche die Halterungen 15 auf dem Grundkörper vorzugsweise lösbar fixieren können.

Vorliegend sind zwei Halterungen 15 zur Befestigung der Aufnahmepartie 11 abgebildet. Diese Anzahl ist nur beispielhaft. Es kann auch lediglich eine Halterung 15 oder es können mehrere, insbesondere 3 oder 4 Halterungen 15, sein. Die einzelnen Halterungen 15 sind entlang des Grundkörpers verschiebbar gelagert, wobei die entsprechenden Verbindungselemente 17, welche die Verbindung zwischen der Halterung 15 und dem Grundkörper bilden, entlang des Grundkörpers verschiebbar lagerbar sind. Vorzugsweise ist hierfür eine Nut innerhalb des Grundkörpers vorgesehen. Das Gleiche gilt auch für die Verbindungselemente 17, welche in den Halterungen 15 zur betrieblichen Aufnahme der Aufnahmepartie 11, zur Fixierung am Gartengerät (16) oder als Auflageelement 14 angeordnet sind. All diese Elemente können individuell Profilkörper aufweisen, um eine verschiebbare/veränderbare Lagerung der Verbindungselemente 17 zu ermöglichen. Hierdurch kann beispielsweise eine Breiteneinstellung der Verbindungselemente 17 zueinander passend für eine entsprechende Aufnahmepartie 11 oder ein Gartengerät 20 erfolgen, da die einzelnen Gartengeräte und Aufnahmepartien unterschiedlich breit ausgebildet sein können.

Aufgrund der veränderbaren Lagerung der Verbindungselemente 17 an der Halterung 15 beziehungsweise an dem Grundkörper des Aufsatzes 10 kann jede der einzelnen Einrichtungen entlang ihres direkten Kontaktelements (Auflageelement 14 an Halterung 15, Halterung 15 am Grundkörper, Aufnahmepartie 11 an Halterung 15) in seinen relativen Anordnungen/Positionen individuell einstellbar sein. Grundsätzlich ist es denkbar, Halterungen 15 für die Aufnahmepartie 11 direkt an einem Gartengerät20 vorzusehen, überwelche die Aufnahmepartei direkt mit dem Arbeitsgerät 20 lösbar verbindbar ist.

Figur 3 zeigt beispielhaft einen Profilkörper 30. Dieser ist mit zwei Vertiefungen 31 gebildet. Grundsätzlich kann ein Profilkörper 1, 2, 3 oder 4 solche Vertiefungen aufweisen, wobei jeweils eine Vertiefung 31 vorzugsweise auf einer der Längsseiten des Profilkörpers bereitgestellt ist. Die Vertiefung 31 ist mit einem Vorsprung 32 und einer Hinterschneidung 33 gebildet, wodurch eine innenliegende Schiene gebildet ist, welche innerhalb des Profilkörpers liegt und entlang welcher Verbindungselemente 17 verschiebbar lagerbar sind. Diese Nuten, wie sie beispielhaft in Figur 2 dargestellt sind, können entlang der gesamten Länge des Profilkörpers vorgesehen sein.

Figur 4 zeigt in einer Seitenansicht die veränderbar lagerbare Verbindung zwischen einer Aufnahmepartie 11 und einem Profilkörper 30, welcher beispielsweise der Grundkörper des Aufsatzes 11 sein kann. In der Nut ist ein lösbares Verbindungselement in Form einer Schraube oder eines Bolzens angeordnet. Der Kopf des Verbindungselements ragt in die Hinterschneidung 33 der Nut des Profilkörpers, wodurch ein Herausfallen des Verbindungselements aus dem Profilkörper zumindest in eine Richtung verhindert ist.

Der Kopf des Verbindungselements kann in der Nut entlang des Profilkörpers verschoben werden, wodurch seine Position entlang des Profilkörpers frei wählbar ist. Hierdurch kann die Position der Verbindung zwischen Profilkörper und im vorliegenden Beispiel der Aufnahmepartie 11 an einem beliebig einstellbaren Punkt entlang des Profilkörpers 30 hergestellt werden. Zur Fixierung der Aufnahmepartie 11 oder einer anderen Einrichtung an dem Profilkörper 30 kann das Verbindungselement 17 durch ein entsprechendes Gegenstück, welches hier in Figur 4 als Mutter für eine Schraube dargestellt ist, mit dem Profilkörper verspannt werden. Hierdurch ist die Position des aufzunehmenden und fixierenden Teils (hier Aufnahmepartie 11) gegenüber dem Profilkörper festlegbar.

Figur 5 zeigt einen erfindungsgemäßen Aufsatz in etwa gemäß Figur 1, welcher jedoch kippbar ausgebildet ist. Dafür kann in einem Verbindungsbereich zwischen dem Grundkörper 12 und der Aufnahmepartie 11 eine gelenkige Verbindung, beispielsweise in Form eines Scharniers A vorgesehen sein, über welche die Aufnahmepartie 11 an dem Grundkörper 12 beweglich gelagert sein kann. Insbesondere für eine verkippungsfreie Festlegung der Aufnahmepartie 11 gegenüber der gelenkigen Verbindung an dem Grundkörper 12 kann eine Verriegelungsmechanik an dem erfindungsgemäßen Aufsatz vorgesehen sein, welcher mit einem entsprechenden Gegenstück der Aufnahmepartie 11 zusammenwirkt.

Durch dieses Zusammenwirken kann die Aufnahmepartie 11 lösbar festgelegt sein, wodurch einer versehentlichen Verstellung des Scharniers A vorgebeugt sein kann. Dafür kann eine Verriegelungsmechanik C an dem Aufsatz vorgesehen sein, welche beispielsweise als Rast-, Schnapp- oder auch magnetische Verbindung die Aufnahmepartie 11 in seiner Position an den Grundkörper 12 festhalten kann.

Als Gegenstück zu der Verriegelungsmechanik C kann ein Riegel B an der Aufnahmepartie 11 vorgesehen sein, welcher in die Verriegelungsmechanik C eingreifen kann. In Figur 5 ist die Aufnahmepartie 11 sowohl in einer mit der Verriegelungsmechanik C verrasteten Position als auch in einer verschwenkten Position (gestrichelte Linien) dargestellt, in welcher der Riegel B von der Verriegelungsmechanik C gelöst vorliegt. Durch die Schwenkbewegung um das Gelenk A kann die Aufnahmepartie in einfacher Weise entleerbar sein.

Figur 6 zeigt einen Verbindungsbereich zwischen dem erfindungsgemäßen Aufsatz 1 und einem antreibbaren Arbeitsgerät 8. Vorzugsweise im Bereich eines Griffs oder Haltebügels 8 des Gartengeräts kann das bereits beschriebene Mittel zur betrieblichen Verbindung 16 vorgesehen sein. Der Haltebügel 8 kann insbesondere ein Bügelgriff sein, welcher eine Öffnung, beispielsweise in Form einer Bohrung aufweist. Nach einer bevorzugten Ausführungsform der vorliegenden Erfindung kann die Verbindung zwischen dem Bügelgriff 8 und dem erfindungsgemäßen Aufsatz wie folgt aufgebaut sein:
Das Mittel zur betrieblichen Verbindung 16 kann beispielsweise mit einer Bohrung in dem Bügelgriff 8 ausgebildet sein, durch welches eine Stange, insbesondere eine Gewindestange 2 hindurchgeführt ist. Zum Befestigen eines ersten Bestandteils des Aufsatzes, welcher vorzugsweise als Nutenprofil 1 ausgebildet ist, kann die Stange 2 über eine Hebelmutter 3 und/oder eine U-Scheibe mit Nase 4 und/oder einen Befestigungswinkel und/oder ein Befestigungselement 5 für das Nutenprofil 1 und vorzugsweise über weitere U-Scheiben 6 und Gewindemuttern 7 an dem Begriff 8 befestigt/verbunden sein.

Zum kraftschlüssigen Befestigen des ersten Teils 1 des erfindungsgemäßen Aufsatzes, welches vorzugsweise als Nutenprofil 1 ausgebildet ist, kann vorzugsweise eine weitere U-Scheibe 9 und eine Hebelmutter 9' auf der gegenüberliegenden Seite des Bügels 8 wie die anderen Bestandteile 2 bis 7 angeordnet sein. Insbesondere die Merkmale 3 bis 7 und 9 und 9' können einzeln austauschbar oder durch andere geeignete Mittel ersetzbar sein.

Der Grundgedanke, der dieser Konstruktion zugrunde liegt, ist das ortsfeste Festlegen des erfindungsgemäßen Aufsatzes (Bezugsziffer 1). In der in Figur 6 ebenfalls dargestellten Ansicht durch die Schnittachse A-A ist die, vorzugsweise form- und/oder kraftschlüssige, Steck-Verbindung zwischen dem Bügelgriff 8 des antreibbaren Gartenarbeitsgeräts und dem erfindungsgemäßen Aufsatz, insbesondere dem Nutprofil 1, über den Befestigungswinkel 5 nochmals verdeutlicht dargestellt.

Hierbei ist ersichtlich, dass der Befestigungswinkel 5 über eine Aussparung auf der Gewindestange 2 aufliegen kann, wobei die U-Scheibe mit Nase festlegend in eine Aussparung des Befestigungswinkels 5 eingreifen kann, wodurch dieser auf der Gewindestange 2 ortsfest festgelegt ist. Dennoch ist durch diese Konstruktion eine Drehbarkeit des Aufsatzes um die Gewindestange 2 ermöglicht.

Nach der vorliegenden Erfindung kann es sich somit bei dem Mittel zur betrieblichen Verbindung zwischen dem erfindungsgemäßen Aufsatz und dem antreibbaren Gartenarbeitsgerät vorzugsweise um eine formschlüssige, jedoch frei drehbare Verbindung durch die beschriebene Öffnung in dem Griff 8 handeln. Hierdurch ist der erfindungsgemäße Aufsatz besonders frei an verschiedene Gartenarbeitsgeräte (drehbar) anpassbar.

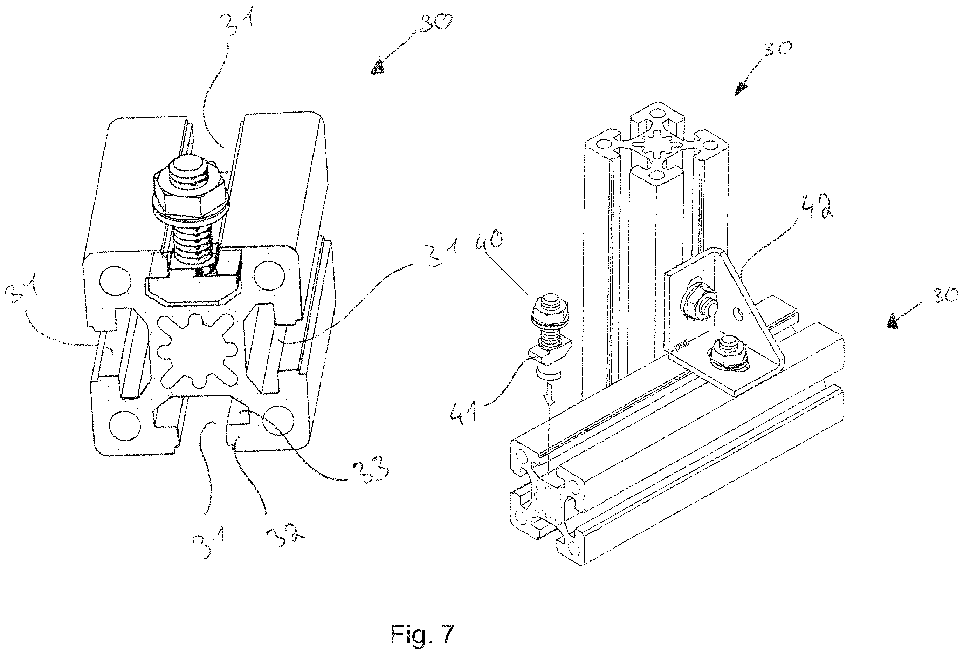

Figur 7 zeigt eine weitere Detailansicht des Profilkörpers nach Figur 3. Aus dieser ist ebenfalls die Vertiefung 31, der Vorsprung 32 beziehungsweise die Hinterschneidung 33 entlang der einzelnen Längsnuten ersichtlich. Zum Verbinden zweier Profilkörper 30 kann einen sprechende Schraubverbindung 40 vorgesehen sein, welche als Schraubenkopf ein Führungselement 41 aufweisen kann, welches der Form nach in etwa der Form der Nut 31 in dem Profilkörper 30 entspricht.

Der Schraubenkopf 41 des Schraubelements 40 kann zumindest so groß sein, dass es in die Hinterschneidungen 33 der Nut 31 hineinragt, wodurch ein Herausfallen der Schraubverbindung 40 quer zur Längsrichtung, in welcher sich die Nut 31 entlang des Profilkörpers 30 erstreckt, verhindert ist. Für eine Verbindung zweier Profilkörper 30, kann ein Winkelelement 42 vorgesehen sein, über welches zumindest jeweils eines der Schraubverbindungen 40 an einem der Profilkörper 30 verbunden werden kann.

Die Verbindung zwischen zwei Profilkörpern 30 kann somit beispielsweise ausgehend von einer Schraubverbindung 40 über ein Winkelelement 42 hin zu einer weiteren Schraubverbindung 40 eines zweiten Profilkörpers 30 erfolgen. Durch das einfache Anlösen zumindest einer der Schraubverbindungen 40 kann die jeweils gelöste Schraubverbindung 40 in ihrer Nut 31 des Profilkörpers 30 verfahrbar sein. Durch das Lösen der kraftschlüssigen Verbindung zwischen Winkelelement 42 und Profilkörper 30, welche durch den Anpressdruck des Winkelelements 42 auf dem Profilkörper 30 mittels der Schraubverbindung zwischen Schraubenkopf 41 und Schraubenmutter bereitgestellt ist, kann eine Verlagerung des Profilkörpers 30 gegenüber dem zweiten Profilkörper beziehungsweise dem Winkelelement 32 erfolgen.

## Patentansprüche

1. Gartenarbeitsgeräteaufsatz (10) für antreibbare Gartenarbeitsgeräte (20) mit
Mitteln zur betrieblichen Verbindung (16) des Gartenarbeitsgeräteaufsatzes mit den Gartenarbeitsgeräten, mit
einer Aufnahmepartie (11) für Transportgut und einem Grundkörper (12, 13) mit einem, im betriebsgemäßen Zustand horizontalen Teil
auf welchem eine Halterung (15) der Aufnahmepartie (11) befestigt ist, **dadurch gekennzeichnet,**
**dass** die Halterung (15) als länglicher Profilkörper mit einer Nut ausgebildet ist, welche entlang des Grundkörpers verschiebbar gelagert ist, indem entsprechende Verbindungselemente (17) in dem Profilkörper, welche die Verbindung zwischen der Halterung (15) und dem Grundkörper bilden, entlang des Grundkörpers verschiebbar gelagert sind.

2. Gartenarbeitsgeräteaufsatz nach Anspruch 1, **dadurch gekennzeichnet, dass** der Gartenarbeitsgeräteaufsatz (10) Mittel zur lösbaren Verbindung (16) mit einem Gartenarbeitsgerät aufweist.

3. Gartenarbeitsgeräteaufsatz nach Anspruch 1 oder 2,
**dadurch gekennzeichnet,**
**dass** die Mittel zur betrieblichen Verbindung (16) als Gelenk oder Achse ausgebildet sind, um welche der Gartenarbeitsgeräteaufsatz, beziehungsweise die Mittel (16) im betriebsgemäßen Verbindungszustand mit einem Gartenarbeitsgerät, relativ zum Gartenarbeitsgerät klappbar und/oder drehbar sind.

4. Gartenarbeitsgeräteaufsatz nach einem der Ansprüche 1 bis 3,
**dadurch gekennzeichnet,**
**dass** der Gartenarbeitsgeräteaufsatz (10) im betriebsgemäßen Verbindungszustand mit einem Gartenarbeitsgerät in einem zweiten und/oder weiteren Kontaktbereich mit dem selbigen mindestens ein Auflageelement (14) zur Auflage des Gartenarbeitsgeräteaufsatzes (10) auf einem Gartenarbeitsgerät (20) aufweist.

5. Gartenarbeitsgeräteaufsatz nach Anspruch 4,
**dadurch gekennzeichnet,**
**dass** das Auflageelement (14) im betriebsgemäßen Verbindungszustand mit einem Gartenarbeitsgerät mit einem Vibrationsentkopplungselement zwischen einem Gartenarbeitsgerät (14) und Gartenarbeitsgeräteaufsatz (10) bereitgestellt ist.

6. Gartenarbeitsgeräteaufsatz nach einem der Ansprüche 1 bis 5,
**dadurch gekennzeichnet,**
**dass** die Aufnahmepartie (11) an einer Halterung (15) des Gartenarbeitsgeräteaufsatzes (10) lösbar befestigt ist.

7. Gartenarbeitsgeräteaufsatz nach Anspruch 1 bis 6,
**dadurch gekennzeichnet,**
**dass** die Halterung (15) dazu eingerichtet ist, zur Befestigung unterschiedlicher Aufnahmepartien (11) angepasst zu werden.

8. Gartenarbeitsgeräteaufsatz nach einem der Ansprüche 1 bis 7,
**dadurch gekennzeichnet,**
**dass** die Mittel zur betrieblichen Verbindung (16) dazu eingerichtet sind, für unterschiedliche Gartenarbeitsgeräte angepasst zu werden.

9. Gartenarbeitsgeräteaufsatz nach einem der Ansprüche 4 bis 8,
**dadurch gekennzeichnet,**
**dass** zumindest die Halterung (15) und/oder die Mittel zur betrieblichen Verbindung (16) und/oder das mindestens eine Auflageelement (14) jeweils mit mindestens einem Profilkörper (30) und/oder Stahlband mit Langlöchern und/oder Stahlrohr mit Langlöchern gebildet sind.

10. Gartenarbeitsgeräteaufsatz nach Anspruch 9,
**dadurch gekennzeichnet,**
**dass** das Auflageelement (14) entlang seines Profilkörpers (30) mit mindestens einem Verbindungselement (17) zur Verbindung mit dem mindestens einen Vibrationsentkoppelungselement verschiebbar gelagert bereitgestellt ist.

## Claims

1. gardening tool attachment (10) for drivable gardening tools (20) with means for operational connection (16) of the gardening tool attachment to the gardening tools, with
a receiving section (11) for transport material and
a base body (12, 13) with a part which is horizontal in the operational state and on which a holder (15) of the receiving section (11) is fastened,
**characterised in that**
that the holder (15) is formed as an elongated profile body with a groove, which is displaceably mounted along the base body, **in that** corresponding connecting elements (17) in the profile body, which form the connection between the holder (15) and the base body, are displaceably mounted along the base body.

2. Garden tool attachment according to claim 1,
**characterised in that**
that the gardening tool attachment (10) comprises means for releasable connection (16) to a gardening tool.

3. Garden tool attachment according to claim 1 or 2,
**characterised in that**
**in that** the means for operational connection (16) are designed as a joint or axle about which the gardening implement attachment, or the means (16) in the operational connection state with a gardening implement, can be folded and/or rotated relative to the gardening implement.

4. Garden tool attachment according to any one of claims 1 to 3,
**characterised in that**
**in that** the gardening implement attachment (10), in the operational connection state with a gardening implement, has, in a second and/or further contact region with the same, at least one support element (14) for supporting the gardening implement attachment (10) on a gardening implement (20).

5. Garden tool attachment according to claim 4,
**characterised in that**
that the support member (14) is provided with a vibration decoupling member between a gardening implement (14) and a gardening implement attachment (10) in the operational connection state with a gardening implement.

6. Garden tool attachment according to any one of claims 1 to 5,
**characterised in that**
**in that** the receiving part (11) is detachably fastened to a holder (15) of the gardening implement attachment (10).

7. Garden tool attachment according to claim 1 to 6,
**characterised in that**
that the holder (15) is arranged to be adapted for fastening different receiving portions (11).

8. Garden tool attachment according to any one of claims 1 to 7,
**characterised in that**
that the means for operational connection (16) are adapted to be adapted for different gardening implements.

9. Garden tool attachment according to any one of claims 4 to 8,
**characterised in that**
**in that** at least the holder (15) and/or the means for operational connection (16) and/or the at least one support element (14) are each formed with at least one profiled body (30) and/or steel strip with elongated holes and/or steel tube with elongated holes.

10. gardening tool attachment according to claim 9,
**characterised in that**
**in that** the support element (14) is provided displaceably mounted along its profile body (30) with at least one connecting element (17) for connection to the at least one vibration decoupling element.

## Revendications

1. Chapiteau d'appareils de jardinage (10) pour appareils de jardinage entraînables (20) avec des moyens de liaison opérationnelle (16) du chapiteau d'appareils de jardinage avec les appareils de jardinage avec un hôte (11) pour un produit à transporter et un corps de base (12,13) avec une partie horizontale dans un état fonctionnel sur lequel est fixé un support (15) de l'hôte (11) est caractérisé de sorte que le support (15) est formé avec une rainure en qualité de corps profilé long qui est disposé tout au long du corps de base déplaçable où des éléments de liaison correspondants (17) sont disposés dans le corps profilé formant la liaison entre le support (15) et le corps de base tout au long du corps de base de manière déplaçable.

2. Chapiteau d'appareils de jardinage selon la revendication 1 est caractérisé de sorte que le chapiteau d'appareils de jardinage (10) présente des moyens de liaison de manière amovible (16) avec un appareil de jardinage.

3. Chapiteau d'appareils de jardinage selon les revendications 1 ou 2 est caractérisé de sorte que les moyens de liaison fonctionnels (16) sont formés en qualité d'articulation ou d'axe autour desquels le chapiteau d'appareils de jardinage ou le cas échéant les moyens (16) en état de liaison fonctionnel avec un appareil de jardinage, relativement l'appareil de jardinage, sont rabattables et/ou rotatifs.

4. Chapiteau d'appareils de jardinage selon les revendications 1 jusqu'à 3 est caractérisé de sorte que le chapiteau d'appareils de jardinage (10) en état de liaison fonctionnel présente avec un appareil de jardinage dans une zone de contact deuxième et/ou autre avec au minimum le même élément de support (14) pour le support du chapiteau des appareils de jardinage (10) sur un appareil de jardinage (20).

5. Chapiteau d'appareils de jardinage selon la revendication 4 est caractérisé de sorte que l'élément de support (14) est à disposition en état de liaison fonctionnel avec un appareil de jardinage avec un élément de découplage de vibration entre un appareil de jardinage (14) et le chapiteau d'appareils de jardinage (10).

6. Chapiteau d'appareils de jardinage selon les revendications 1 jusqu'à 5 est caractérisé de sorte que l'hôte (11) est fixé sur un support (15) du chapiteau des appareils de jardinage (10) de manière amovible.

7. Chapiteau d'appareils de jardinage selon les revendications 1 jusqu'à 6 est caractérisé de sorte que le support (15) est mis en place pour la fixation des différents supports (11) adaptables.

8. Chapiteau d'appareils de jardinage selon les revendications 1 jusqu'à 7 est caractérisé de sorte que les moyens pour la liaison fonctionnel (16) est mis en place pour être adaptables aux différents appareils de jardinage.

9. Chapiteau d'appareils de jardinage selon les revendications 4 jusqu'à 8 est caractérisé de sorte qu'au minimum le support (15) et/ou les moyens de liaison fonctionnel (16) et/ou au minimum un élément de support (14) sont formés respectivement avec au minimum son corps profilé (30) et/ou un ruban d'acier avec des trous oblongs et/ou un tube d'acier avec des trous oblongs.

10. Chapiteau d'appareils de jardinage selon la revendication 9 est caractérisé de sorte que l'élément de support (14) est disposé tout au long du corps profilé (30) avec au minimum un élément de liaison (17) pour la liaison avec au minimum un élément de découplage de vibration de manière déplaçable.
